(19) Europäisches Patentamt
European Patent Office
Office européen des brevets

(11) **EP 3 624 291 A1**

(12) **EUROPEAN PATENT APPLICATION**
published in accordance with Art. 153(4) EPC

(43) Date of publication:
**18.03.2020 Bulletin 2020/12**

(51) Int Cl.:
**H02J 3/24** (2006.01)

(21) Application number: **18901140.6**

(22) Date of filing: **18.01.2018**

(86) International application number:
**PCT/CN2018/073176**

(87) International publication number:
**WO 2019/140584 (25.07.2019 Gazette 2019/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **North China Electric Power University**
**Beijing 102206 (CN)**

(72) Inventors:
- **LIU, Chongru**
  **Beijing 102206 (CN)**
- **XIE, Guochao**
  **Beijing 102206 (CN)**
- **WANG, Yu**
  **Beijing 102206 (CN)**

- **KONG, Wei**
  **Beijing 102206 (CN)**
- **WANG, Jiecong**
  **Beijing 102206 (CN)**
- **LING, Bowen**
  **Beijing 102206 (CN)**
- **LIU, Haoyu**
  **Beijing 102206 (CN)**
- **XU, Shitian**
  **Beijing 102206 (CN)**
- **YU, Jianyu**
  **Beijing 102206 (CN)**

(74) Representative: **Ridderbusch, Oliver**
**Prisma IP**
**Patentanwaltskanzlei**
**Landshuter Allee 10**
**80637 München (DE)**

(54) **METHOD FOR ONLINE ADAPTIVE SUPPRESSION OF HIGH-FREQUENCY OSCILLATION CAUSED BY FLEXIBLE DIRECT CURRENT**

(57) The present invention belongs to the field of power system operation and control technologies, and in particular, to a method for online adaptive suppression of high-frequency resonance caused by a flexible direct current, including: installing a plurality of notch filters whose characteristic frequencies can be adjusted online in series in an MMC-HVDC control system, conducting notch filtering on a local commutation bus voltage having undergone Park transformation, and setting a frequency range threshold and a harmonic amplitude threshold; conducting FFT computation on a commutation bus voltage signal to obtain an amplitude of each harmonic, and detecting a maximum amplitude value of harmonics whose frequencies are higher than the frequency range threshold and a frequency corresponding to the maxi- mum amplitude value; and when an operating mode of an alternating-current power grid changes and causes significant high-frequency resonance between an alternating-current system and a direct-current system, load- ing a notch filter that suppresses a harmonic of this fre- quency, and locking a loaded state. In the present inven- tion, an amplitude of a high-frequency harmonic can be reduced to below the harmonic amplitude threshold in a very short time, a direct-current voltage and direct-current power are also restored to setting values, so as to effectively suppress a high-frequency resonance problem caused in the MMC-HVDC system and improve a dynamic response of the system.

FIG. 1

**Description**

TECHNICAL FIELD

The present invention belongs to the field of power system operation and control technologies, and in particular, to a method for online adaptive suppression of high-frequency resonance caused by a flexible direct current.

BACKGROUND

Since 2010, modular multilevel converter (MMC) has been used in most new voltage source converter based high voltage direct current (VSC-HVDC) projects at home and abroad. As modular multilevel converter based high-voltage direct current (MMC-HVDC) technologies and engineering applications are increasingly mature, there are increasing MMC-HVDC based alternating current/direct current parallel transmission systems. MMC-HVDC has high response speed, flexibility, controllability, no need for reactive power compensation, and fault handling capability, which has a profound impact on the dynamic response, control mode, and stable operation of the power grid.

In an actual high-voltage large-capacity MMC-HVDC system, there are hundreds of submodules in each bridge arm, links such as sampling, station control, valve control, and protection of the system are relatively dispersive, and it is difficult to reduce the control link delay because of data communication between a plurality of control and protection devices. A relatively long delay of the control link leads to a high-frequency resonance phenomenon between the converter and the alternating-current power grid. Factors such as the sampling delay of the measurement system, the calculation delay of the control system, the dead zone effect of the converter valve switching device, and the trigger delay of the valve device all possibly lead to a high-frequency resonance phenomenon, threatening the safe and stable operation of MMC.

SUMMARY

In view of the foregoing problem, the present invention proposes a method for online adaptive suppression of high-frequency resonance caused by a flexible direct current, including the following steps:

Step 1: Install a plurality of notch filters whose characteristic frequencies can be adjusted online in series in an MMC-HVDC control system, number the plurality of notch filters and design load/exit logic, conduct notch filtering on a local commutation bus voltage signal having undergone Park transformation, and set initial states of all the notch filters to exit states, and set thresholds C1 and C2.

Step 2: Acquire the local commutation bus voltage signal; conduct FFT computation on the local commutation bus voltage signal to obtain an amplitude of each harmonic, where a harmonic whose frequency exceeds the threshold C1 set in step 1 is a high-frequency harmonic; and detect a maximum amplitude value of high-frequency harmonics and a frequency corresponding to the maximum amplitude value.

Step 3: Load a notch filter, where loading of each notch filter should meet two conditions at the same time: first, the maximum amplitude value of the high-frequency harmonics exceeds the threshold C2 set in step 1, and second, the frequency corresponding to the current maximum amplitude value of the high-frequency harmonics is different from frequencies of harmonics suppressed by all loaded notch filters; and lock a loaded state of the loaded notch filter.

Step 4: Repeat step 2 and step 3 successively until all detected amplitudes of high-frequency harmonics are less than C2; and when content of high-frequency harmonics of the system suddenly increases due to a change of a system operation mode, cancel loaded states of all loaded notch filters, and jump to step 2.

Step 1 specifically includes:

installing the plurality of notch filters in the MMC-HVDC control system, and filtering $U_d$ and $U_q$ obtained through Park transformation, where $U_d$ and $U_q$ means that: the MMC-HVDC control system conducts vector control to convert a three-phase alternating current component in an *abc* coordinate system to a synchronously rotating direct current component in a *dq* coordinate system through coordinate transformation to establish an MMC mathematical model, and a commutation bus voltage in the *abc* coordinate system is converted to $U_d$ and $U_q$ in the *dq* coordinate system; and a characteristic frequency and a coefficient $\xi$ of each notch filter can be adjusted online, and the coefficient $\xi$ is the damping ratio;

the threshold C1 is a frequency range threshold, a harmonic whose frequency exceeds the threshold C1 is marked as a high-frequency harmonic, the threshold C1 and a higher frequency is a frequency range, and the threshold C1 is obtained based on a specific frequency margin of a frequency range of high-frequency resonance; and

the threshold C2 is a harmonic amplitude threshold; only when a harmonic amplitude corresponding to a frequency exceeds the threshold C2, a notch filter can be triggered to be loaded; and the threshold C2 is obtained by multiplying a fundamental wave amplitude with a specific ratio during a normal operation.

Step 3 specifically includes:
when there is a high-frequency harmonic whose amplitude exceeds the threshold C2 set in step 1, and no notch filter that suppresses the frequency is loaded, sequentially selecting a notch filter for loading, enabling a trigger signal of the notch filter, recording a frequency corresponding to a maximum amplitude value of a high-frequency harmonic at a trigger moment as a to-be-suppressed harmonic frequency of the notch filter, setting a parameter of the notch filter online, and locking a loaded state of the notch filter, where only one notch filter is loaded based on one characteristic frequency.

Step 4 specifically includes:

when the system operates in a steady state, and when content of high-frequency harmonics of the system suddenly increases due to a change of a system operation mode, canceling loaded states of all loaded notch filters, changing characteristic frequencies of the notch filters when a loading condition is satisfied, and locking the loaded states of the notch filters again.

Beneficial effects are as follows:

The present invention proposes a method for adding a notch filter to the MMC control system for suppressing high-frequency resonance, and proposes a method for online adaptive loading of a notch filter. In the present invention, a notch filter is added to the MMC control system, and load/exit logic is set. When a high-frequency resonance phenomenon occurs, the load/exit logic can be used for automatically identifying a high resonance frequency and loading a notch filter for suppression. The present invention can effectively suppress a high-frequency resonance problem caused in the MMC-HVDC system and improve a dynamic response of the system.

In the method proposed in the present invention, the plurality of notch filters whose characteristic frequencies can be adjusted online are installed in series in the MMC-HVDC control system, notch filtering is conducted on a local commutation bus voltage having undergone Park transformation, and the frequency range threshold and the harmonic amplitude threshold are set; FFT is conducted on the commutation bus voltage signal to obtain the amplitude of each harmonic, and a maximum amplitude value of high-frequency harmonics and a frequency corresponding to the maximum amplitude value are detected; and when an operating mode of the alternating-current power grid changes and causes significant high-frequency resonance between an alternating-current system and a direct-current system, a notch filter that suppresses a harmonic of this frequency is loaded, and an loaded state of the notch filter is locked. In this way, an amplitude of a high-frequency harmonic can be reduced to below the harmonic amplitude threshold in a very short time, a direct-current voltage and direct-current power are also restored to setting values.

## BRIEF DESCRIPTION OF DRAWINGS

FIG. 1 is a topological diagram of a simulation system according to Embodiment 2 of the present invention;
FIG. 2 is a schematic diagram of a changing curve of a maximum harmonic amplitude according to Embodiment 2 of the present invention;
FIG. 3 is a schematic diagram of a frequency changing curve of a harmonic with a maximum amplitude according to Embodiment 2 of the present invention;
FIG. 4 is a schematic diagram of a characteristic frequency of each notch filter according to Embodiment 2 of the present invention;
FIG. 5 is a schematic diagram of an unload state of each notch filter according to Embodiment 2 of the present invention;
FIG. 6 is a schematic diagram of a direct-current voltage of a sending end according to Embodiment 2 of the present invention; and
FIG. 7 is a schematic diagram of direct-current power of a sending end according to Embodiment 2 of the present invention.

## DETAILED DESCRIPTION

The following describes the embodiments in detail with reference accompanying drawings.

Embodiment 1

Step 1: Install a plurality of notch filters whose characteristic frequencies can be adjusted online in series in an MMC-HVDC control system, number the plurality of notch filters and design load/exit logic, conduct notch filtering on a local commutation bus voltage signal having undergone Park transformation, and sett initial states of all the notch filters to exit states, and set thresholds C1 and C2.

Step 2: Acquire the local commutation bus voltage signal; conduct FFT computation on the local commutation bus voltage signal to obtain an amplitude of each harmonic, where a harmonic whose frequency exceeds the threshold C1 set in step 1 is a high-frequency harmonic; and detect a maximum amplitude value of high-frequency harmonics and a frequency corresponding to the maximum amplitude value.

Step 3: Load a notch filter, where loading of each notch filter should meet two conditions at the same time: first, the maximum amplitude value of the high-frequency harmonics exceeds the threshold C2 set in step 1, and second, the frequency corresponding to the current maximum amplitude value of the high-frequency harmonics is different from frequencies of harmonics suppressed by all loaded notch filters; and lock a loaded state of the loaded notch filter.

Step 4: Repeat step 2 and step 3 successively until all detected amplitudes of high-frequency harmonics are less than C2; and when content of high-frequency harmonics of the system suddenly increases due to a change of a system operation mode, cancel loaded states of all loaded notch filters, and jump to step 2.

Further:
in step 1, the plurality of notch filters whose characteristic frequencies can be adjusted online are installed in series in the MMC-HVDC control system, where the notch filter is a band rejection filter, and a typical transfer function of a second-order notch filter is represented as the following formula (1):

$$G(s) = \frac{s^2 + \omega^2}{s^2 + 2\xi\omega s + \omega^2} \quad (1)$$

Where s is a Laplace operator, $\omega$ is a characteristic frequency, $\xi$ is the damping ratio, and $\omega$ and $\xi$ can be adjusted online.

Notch filtering is conducted on $U_d$ and $U_q$ obtained through Park transformation, where $U_d$ and $U_q$ means that: the MMC-HVDC uses a vector control strategy to convert a three-phase alternating current component in an *abc* coordinate system to synchronously rotating direct current component in a *dq* coordinate system through coordinate transformation to establish an MMC mathematical model, and a commutation bus voltage in the *abc* coordinate system is converted to $U_d$ and $U_q$ in the dq coordinate system.

The threshold C1 is a frequency range threshold, a harmonic whose frequency exceeds the threshold C1 is marked as a high-frequency harmonic, the threshold C1 and a higher frequency is a frequency range of the present invention, and the threshold C1 is obtained based on a specific frequency margin of a frequency range in which high-frequency resonance may occur.

The threshold C2 is a harmonic amplitude threshold; only when a harmonic amplitude corresponding to a frequency exceeds the threshold C2, a notch filter can be triggered to be loaded; and the threshold C2 may be obtained by multiplying a fundamental wave amplitude with a specific ratio during a normal operation.

Step 3 specifically includes: when there is a high-frequency harmonic whose amplitude exceeds the threshold C2 set in step 1, and no notch filter that suppresses the frequency is loaded, sequentially selecting a notch filter for loading, enabling a trigger signal of the notch filter, recording a frequency corresponding to a maximum amplitude value of a high-frequency harmonic at a trigger moment as a to-be-suppressed harmonic frequency of the notch filter, setting a parameter of the notch filter online, and locking a loaded state of the notch filter. Only one notch filter is loaded based on one characteristic frequency. It should be noted that, an $(n-1)^{th}$ harmonic is obtained by Park transformation of an $n^{th}$ harmonic, and therefore a characteristic frequency actually input to the notch filter is 1 lower than the recorded to-be-suppressed harmonic frequency at the trigger moment.

When the system operates in a steady state, and when content of high-frequency harmonics of the system suddenly increases due to a change of a system operation mode, loaded states of all loaded notch filters are canceled, characteristic frequencies of the notch filters are changed when a loading condition is satisfied, and the loaded states of the notch filters are locked again.

Embodiment 2

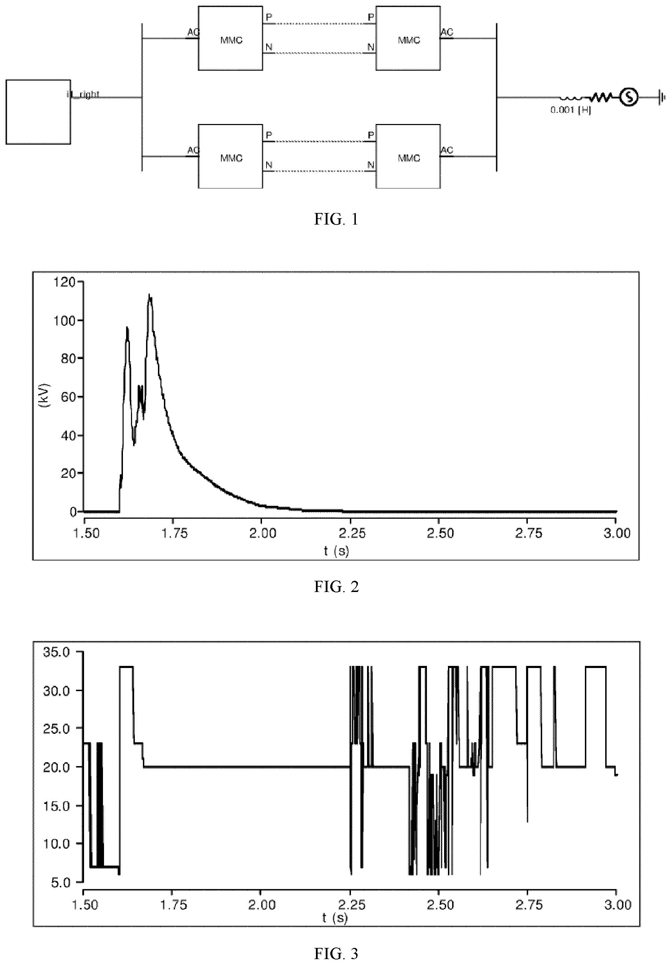

A simulation system topology is shown in FIG. 1, and a PSCAD/EMTDC simulation tool is used to describe an application of the method proposed in the present invention in a suppression problem of a high-frequency harmonic in MMC-HVDC.

The simulation system is a two-terminal two-channel MMC-HVDC system. The sending end is simulated by using an equivalent power grid, a voltage grade of the equivalent power grid is 525 kV, and a commutation bus of the sending end is connected to two alternating current circuits. A receiving end is simulated by using an infinite power supply, and an MMC at the sending end conducts constant direct-current voltage and reactive power control, and setting valves are respectively 840 kV and 0 MVar. An MMC at the receiving end conducts constant active power and reactive power control, and setting valves are respectively -1250 MW and 0 MVar. It is simulated that an alternating current circuit at the commutation bus of the sending end is turned off due to a fault. According to the method in the present invention, a suppression effect of high-frequency resonance is tested.

Six notch filters are installed in an MMC control system, and initial states of the notch filter are exit states. A frequency range threshold C1 is set to 250 Hz, a harmonic amplitude threshold C2 is 80 kV, a delay time of the MMC control system is set to 400 $\mu$s, and a value of a damping ratio $\xi$ is 0.1, and it is specified that when a time is 1.6 s, an alternating current circuit at the commutation bus of the sending end is turned off due to a fault.

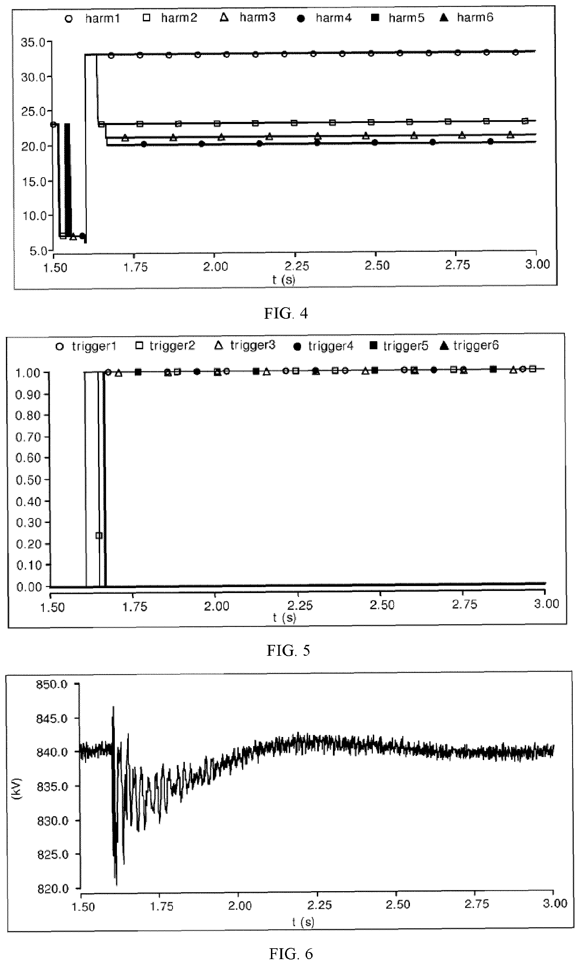

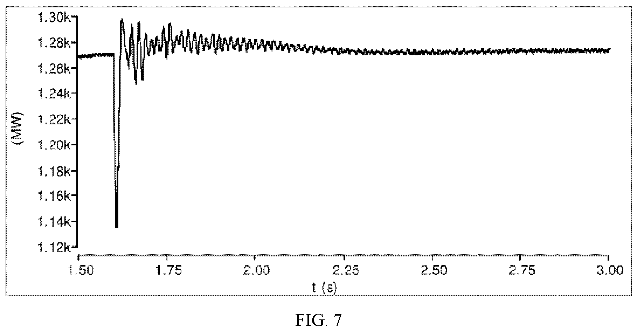

A changing curve of a maximum harmonic amplitude is shown in FIG. 2, a frequency changing curve of a harmonic with a maximum amplitude is shown in FIG. 3, a characteristic frequency of each notch filter is shown in FIG. 4, an unload state of each notch filter is shown in FIG. 5, a direct-current voltage of a sending end is shown in FIG. 6, and direct-current power of a sending end is shown in FIG. 7.

When an operation mode of the an alternating current system changes due to a fault, a response characteristic of the alternating current system changes, so that high-frequency resonance occurs between the alternating-current system and a direct-current system, and maximum amplitude resonance frequencies 1650 Hz, 1150 Hz, 1050 Hz, and 1000 Hz successively appear, and then four notch filters of corresponding characteristic frequencies are loaded, and the characteristic frequencies are respectively 1600 Hz, 1100 Hz, 1000 Hz , and 950 Hz. After 0.4s, a harmonic amplitude is reduced to a very small value, and a direct-current voltage and direct-current power are restored to setting values.

The embodiments are merely specific implementations of the present invention, but the protection scope of the present invention is not limited thereto. A person skilled in the art can easily conceive modifications or replacements within the technical scope of the present invention, and these modifications or replacements shall fall within the protection scope of the present invention. Therefore, the protection scope of the present invention shall be subject to the protection scope of the claims.

**Claims**

1. A method for online adaptive suppression of high-frequency resonance caused by a flexible direct current, comprising:

   step 1: installing a plurality of notch filters whose characteristic frequencies can be adjusted online in series in an MMC-HVDC control system, numbering the plurality of notch filters and designing load/exit logic, conducting notch filtering on a local commutation bus voltage signal having undergone Park transformation, and setting initial states of all the notch filters to exit states, and setting thresholds C1 and C2;
   step 2: acquiring the local commutation bus voltage signal; conducting FFT computation on the local commutation bus voltage signal to obtain an amplitude of each harmonic, wherein a harmonic whose frequency exceeds the threshold C1 set in step 1 is a high-frequency harmonic; and detecting a maximum amplitude value of high-frequency harmonics and a frequency corresponding to the maximum amplitude value;
   step 3: loading a notch filter, wherein loading of each notch filter should meet two conditions at the same time: first, the maximum amplitude value of the high-frequency harmonics exceeds the threshold C2 set in step 1, and second, the frequency corresponding to the current maximum amplitude value of the high-frequency harmonics is different from frequencies of harmonics suppressed by all loaded notch filters; and locking a loaded state of the loaded notch filter; and
   step 4: repeating step 2 and step 3 successively until all detected amplitudes of high-frequency harmonics are less than C2; and when content of high-frequency harmonics of the system suddenly increases due to a change of a system operation mode, canceling loaded states of all loaded notch filters, and jumping to step 2.

2. The method for online adaptive suppression of high-frequency resonance caused by a flexible direct current according to claim 1, wherein step 1 specifically comprises:

   installing the plurality of notch filters in the MMC-HVDC control system, and filtering $U_d$ and $U_q$ obtained through Park transformation, wherein $U_d$ and $U_q$ means that: the MMC-HVDC control system conducts vector control to convert a three-phase alternating current component in an *abc* coordinate system to synchronously rotating direct current component in a *dq* coordinate system through coordinate transformation to establish an MMC mathematical model, and a commutation bus voltage in the *abc* coordinate system is converted to $U_d$ and $U_q$ in the *dq* coordinate system; and a characteristic frequency and a coefficient $\xi$ of each notch filter can be adjusted online, and the coefficient $\xi$ is a damping ratio;
   the threshold C1 is a frequency range threshold, a harmonic whose frequency exceeds the threshold C1 is marked as a high-frequency harmonic, the threshold C1 and a higher frequency is a frequency range, and the threshold C1 is obtained based on a specific frequency margin of a frequency range of high-frequency resonance; and
   the threshold C2 is a harmonic amplitude threshold; only when a harmonic amplitude corresponding to a frequency exceeds the threshold C2, a notch filter can be triggered to be loaded; and the threshold C2 is obtained by multiplying a fundamental wave amplitude with a specific ratio during a normal operation.

3. The method for online adaptive suppression of high-frequency resonance caused by a flexible direct current according to claim 1, wherein step 3 specifically comprises:
   when there is a high-frequency harmonic whose amplitude exceeds the threshold C2 set in step 1, and no notch filter that suppresses the frequency is loaded, sequentially selecting a notch filter for loading, enabling a trigger signal of the notch filter, recording a frequency corresponding to a maximum amplitude value of a high-frequency harmonic at a trigger moment as a to-be-suppressed harmonic frequency of the notch filter, setting a parameter of the notch filter online, and locking a loaded state of the notch filter, wherein only one notch filter is loaded based on one characteristic frequency.

4. The method for online adaptive suppression of high-frequency resonance caused by a flexible direct current according to claim 1, wherein step 4 specifically comprises:
   when the system operates in a steady state, and when content of high-frequency harmonics of the system suddenly increases due to a change of a system operation mode, canceling loaded states of all loaded notch filters, changing characteristic frequencies of the notch filters when a loading condition is satisfied, and locking the loaded states of the notch filters again.

FIG. 1

FIG. 2

FIG. 3

FIG. 4

FIG. 5

FIG. 6

FIG. 7

## INTERNATIONAL SEARCH REPORT

| International application No. |
|---|
| **PCT/CN2018/073176** |

**A.    CLASSIFICATION OF SUBJECT MATTER**

H02J 3/24(2006.01)i

According to International Patent Classification (IPC) or to both national classification and IPC

**B.    FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

EPODOC, WPI, CNPAT, USTXT, CNKI, IEEE: 抑制, 高频, 振荡, 陷波, 谐波 ,depress+, high frequenc+, oscill+, trap+, harmonic+

**C.    DOCUMENTS CONSIDERED TO BE RELEVANT**

| Category* | Citation of document, with indication, where appropriate, of the relevant passages | Relevant to claim No. |
|---|---|---|
| A | CN 104934991 A (STATE GRID CORPORATION OF CHINA ET AL.) 23 September 2015 (2015-09-23) <br> description, paragraphs [0023]-[0045], and figures 1-5 | 1-4 |
| A | US 6388517 B1 (MURATA MANUFACTURING CO., LTD.) 14 May 2002 (2002-05-14) <br> entire document | 1-4 |
| A | CN 102799125 A (TSINGHUA UNIVERSITY) 28 November 2012 (2012-11-28) <br> entire document | 1-4 |
| A | US 2017025978 A1 (STATE GRID ZHEJIANG ELECTRIC POWER RESEARCH INSTITUTE ET AL.) 26 January 2017 (2017-01-26) <br> entire document | 1-4 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 September 2018** | **24 October 2018** |

| Name and mailing address of the ISA/CN | Authorized officer |
|---|---|
| **State Intellectual Property Office of the P. R. China (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2018/073176**

| Patent document cited in search report | | | Publication date (day/month/year) | Patent family member(s) | | | Publication date (day/month/year) |
|---|---|---|---|---|---|---|---|
| CN | 104934991 | A | 23 September 2015 | CN | 104934991 | B | 19 April 2017 |
| US | 6388517 | B1 | 14 May 2002 | JP | 3617377 | B2 | 02 February 2005 |
| | | | | JP | 2001007661 | A | 12 January 2001 |
| | | | | KR | 364970 | B | 16 December 2002 |
| | | | | KR | 20010007468 | A | 26 January 2001 |
| CN | 102799125 | A | 28 November 2012 | CN | 102799125 | B | 12 August 2015 |
| US | 2017025978 | A1 | 26 January 2017 | CN | 104868487 | B | 29 August 2017 |
| | | | | US | 9906177 | B2 | 27 February 2018 |
| | | | | CN | 104868487 | A | 26 August 2015 |

Form PCT/ISA/210 (patent family annex) (January 2015)